# EUROPEAN PATENT SPECIFICATION

(11) **EP 1 127 422 B1**
(45) Date of publication and mention of the grant of the patent: **24.08.2005**
(21) Application number: 99957511.1
(22) Date of filing: 03.11.1999
(51) Int. Cl.: H04L 1/18, H04L 1/00

(54) **SYSTEM AND METHOD FOR WIRELESS COMMUNICATION SUPPORTING LINK ADAPTATION AND INCREMENTAL REDUNDANCY**
SYSTEM UND VERFAHREN FÜR DRAHTLOSE KOMMUNIKATION MIT VERBINDUNGSANPASSUNG UND INKREMENTALER REDUNDANZ
SYSTEME ET PROCEDE DESTINES A LA COMMUNICATION SANS FIL QUI PREND EN CHARGE L'ADAPTATION DE LIAISON ET LA REDONDANCE INCREMENTALE

(30) Priority: 03.11.1998 US 106802 P
(43) Date of publication of application: 29.08.2001
(73) Proprietor: LUCENT TECHNOLOGIES, INC., Murray Hill, New Jersey 07974 (US)
(72) Inventor: BALACHANDRAN, Krishna, Middletown, NJ 07748 (US); EJZAK, Richard, P., Wheaton, IL 60187 (US); NANDA, Sanjiv, Clarksburg, NJ 08510 (US)
(74) Representative: Sarup, David Alexander
(86) International application number: PCT/US1999/025981
(87) International publication number: WO 2000/027064

(56) References cited:
- KALLEL S: "COMPLEMENTARY PUNCTURED CONVOLUTIONAL (CPC) CODES AND THEIR USE IN HYBRID ARQ SCHEMES" PROCEEDINGS OF THE PACIFIC RIM CONFERENCE ON COMMUNICATIONS, COMPUTERSAND SIGNAL PROCESSING,US,NEW YORK, IEEE, vol. -, 1993, pages 186-189, XP000409283
- TADAFUSA NIINOMI ET AL: "SELECTIVE REPEAT TYPE-II HYBRID ARQ/FEC SCHEME USING RATE-COMPATIBLE PUNCTURED CONVOLUTIONAL CODE" INTERNATIONAL CONFERENCE ON COMMUNICATIONS,US,NEW YORK, IEEE, vol. 3, 1990, pages 1251-1255, XP000146015
- S. ERIKSSON ET AL.: "Comparison of Link Quality Control Strategies for Packet Data Services in EDGE." VEHICULAR TECHNOLOGY CONFERENCE, 1999 IEEE, 16 - 20 May 1999, pages 938-942, XP002132911

## Description

### BACKGROUND OF THE INVENTION

The present invention relates generally to wireless communication networks and, in particular, to method for efficiently providing data communications over an air interface.

This section is intended to introduce tne reader to various aspects of art that may be related to various aspects of the present invention which are described and/or claimed below. This discussion is believed to be helpful in providing the reader with background information to facilitate a better understanding of the various aspects of the present invention. Accordingly, it should be understood that these statements are to be read in this light, and not as admissions of prior art.

The widespread growing popularity of the Internet has encouraged wireless communication system developers to continually improve the data communication capabilities of their systems. In response to this need, various standards bodies are formulating new third generation (3G) standards which support higher data rates. For example, standards organizations such as the European Telecommunications Standards Institute (ETSI), the Association of Radio Industries and Broadcasting (ARIB) and the Telecommunications Industry Association (TIA) are continually developing standards to support faster and more efficient wireless communications.

Consequently, the wireless communications industry is developing and implementing new wireless transmission protocols which provide faster, more robust and more efficient data communications over an air interface. For example, general packet radio service (GPRS) has been developed as a packet-switched upgrade for the well known time division multiple access (TDMA) system. In a further advancement in the art, enhanced GPRS (EGPRS) has also been developed.

In order to improve the performance of wireless data communications links, link quality control schemes are being developed. Two known methods for improving robustness of the communications channel are link adaptation and incremental redundancy. Link adaptation is the dynamic selection of modulation and coding schemes based on radio link quality. These methods are often referred to as link quality control. There continues however to be a need in the art for faster, more efficient and more robust methods for transmitting data over an air interface.

This need is met by the method of the present invention wherein both link adaptation and incremental redundancy are capable of being supported and wherein the data is transmitted in an efficient, flexible manner.

Kallel S: "Complementary Punctured Convolutional (CPC) Codes and their Use in Hybrid ARQ Schemes" Proceedings of the Pacific Rim Conference on Communications, Computers and Signal Processing, US, NEW YORK, IEEE, 1993, pages 186-189, discloses a new class of punctured convolutional codes that are complementary. Based on these complementary punctured convolutional (CPC) codes a variation of the type II hybrid ARQ scheme is presented. The main advantage of this scheme is that any additional sequence sent for a packet that is detected with errors is self decodable. That is the decoder does not have to rely on previously received sequences for the same data packet for decoding, as is the case with incremental redundancy ARQ schemes.

Tadafusa Niinomi et al: "Selective Repeat Type-II Hybrid ARQ/FEC Scheme Using Rate-Compatible Punctured Convolutional Code" International Conference on Communications, US, New York, IEEE, vol. 3, 1990, pages 1251-1255, disclose selection of a number of incremental redundancy bits that are combined with previously received bits.

### Summary of the Invention

A system and method according to the invention are as set out in the independent claims. Preferred forms are set out in the dependent claims.

Certain aspects commensurate in scope with the originally claimed invention are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below. Since the following is for summary purposes only, none of the aspects present below should be considered essential, or necessary, to the present invention, which is solely defined by the appended claims.

In accordance with one aspect of the present invention, a system and method are disclosed which provide wireless communication capabilities while supporting link adaptation and incremental redundancy. The invention forms fixed length radio link control (RLC) blocks. Cyclic redundancy check sequences are combined with the fixed length RLC blocks to form error coded RLC blocks. The error coded RLC blocks are processed to form coded sub-blocks. The coded sub-blocks are assembled into transmission units based on the multiple code rates. A header indicative of the transmission units is formed. The header and the transmission units are then transmitted.

These and other features and advantages of the present invention will become apparent from the following detailed description, the accompanying drawings and the appended claims.

### BRIEF DESCRIPTION OF THE DRAWINGS

The foregoing and other advantages of the invention will become apparent upon reading the following detailed description and upon reference to the drawings in which:
FIG. 1 is a graphical representation of three cell sites within a cluster in a system for wireless communication in accordance with one aspect of the present invention;
FIG. 2 is a general block diagram of a base station and a mobile station in the system of FIG. 1;
FIG. 3 is a graphical representation of a method for formatting wireless signals for transmission in the system of FIG. 1 in accordance with one aspect of the present invention;
FIG. 4 is a graphical representation of a method for formatting wireless signals for transmission in the system of FIG. 1 in accordance with another aspect of the present invention;
FIG. 5 is a graphical representation of a method for formatting wireless signals for transmission in the system of FIG. 1 in accordance with yet another aspect of the present invention;
FIG. 6A is a graphical representation of a short header which may be advantageously employed in the present invention;
FIG. 6B is a graphical representation of a plurality of extended headers which may be advantageously employed in the present invention; and
FIG. 7 is a graphical representation of a plurality of extended headers which may be advantageously employed in the present invention.

### DETAILED DESCRIPTION OF THE INVENTION

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developer's specific goals, such as compliance with system related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

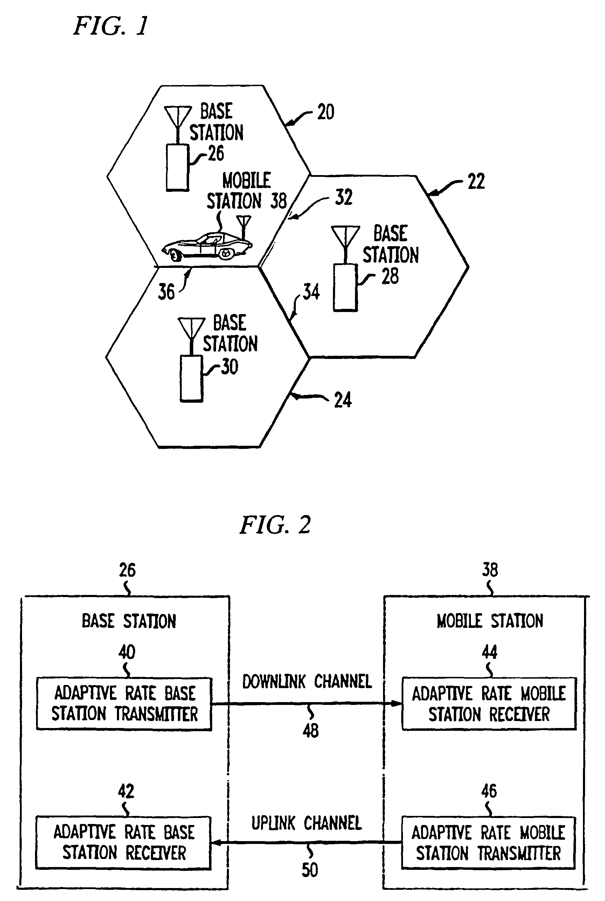

Referring now to the drawings and initially to FIG. 1, a system for providing wireless communications supporting link adaptation (LA) and incremental redundancy (IR) in accordance with one aspect of the present invention is shown. A plurality of cells 20, 22, and 24 in a telecommunications system are shown. Consistent with convention, each cell 20, 22, and 24 is shown having a hexagonal cell boundary. Within each cell 20, 22, and 24 are base stations 26, 28, and 30 that are located near the center of the corresponding cell 20, 22, and 24. Specifically, the base station 26 is located within cell 20, base station 28 is located within cell 22, and base station 30 is located within cell 24.

The boundaries 32, 34 and 36 separating the cells 20, 22, and 24 generally represent the points where mobile assisted handoffs occurs. As an example, when a mobile station 38 moves away from base station 26 towards an adjacent base station 28, the signal-to-noise ratio (SNR) from the base station 26 will drop below a certain threshold level past the boundary 32 while, at the same time, the SNR from the second base station 28 increases above this threshold level as the mobile station 38 crosses the boundary 32 into the cell 22. Cellular systems are engineered to provide coverage from each base station up until the cell boundary. Thus, the SNR over a large portion of a cell 20 is sufficient to support higher data rates because the SNR from the base station 26 is greater than the minimum SNR needed to support the data transfer at the boundary 32. FIG. 2 is an example implementation of an adaptive rate system which takes advantage of this support for higher data rates.

FIG. 2 is a block diagram for the schematic of the base station 26 and the mobile station 38 in accordance with the invention. The base station 26 consists of both an adaptive rate base station transmitter 40 and an adaptive rate base station receiver 42. Likewise, the mobile station 38 also consists of both an adaptive rate mobile station receiver 44 and an adaptive rate mobile transmitter 46. Each pair of the transmitter and the receiver, corresponding to either the base station 26 or mobile station 38, are in radio connection via a corresponding channel.

Thus, the adaptive rate base station transmitter 40 is connected through a downlink channel 48 to the adaptive rate mobile receiver 44 and the adaptive rate mobile station transmitter 46 is connected through an uplink channel 50 to the adaptive rate base station receiver 42. This implementation allows for increased throughput between the base station 26 and the mobile station 38 over both the downlink channel 48 and the uplink channel 50 because of the use of adaptive bandwidth efficient coded modulation schemes. Those interested in a more details of a hardware implementation of a wireless communications systems which may be advantageously employed in accordance with the present invention are referred to US-B-6 389 066.

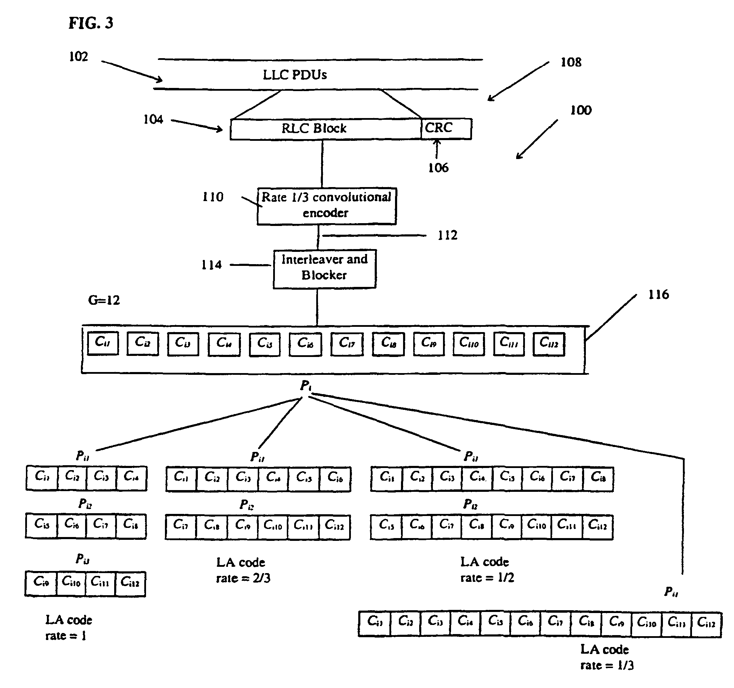

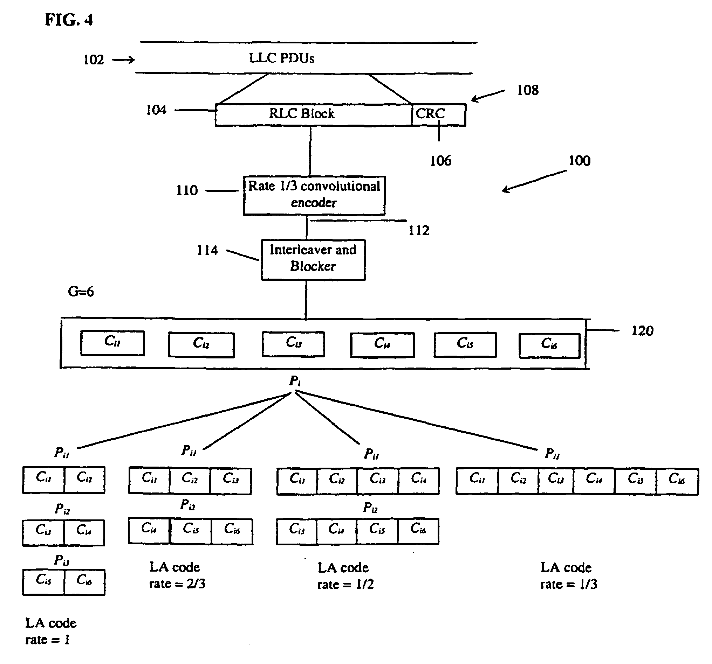

Referring now to FIGS. 3 and 4, a method 100 for communicating in a wireless communication system which is adaptable for LA and IR is shown in accordance with the present invention. The adaptive rate base station transmitter and receiver 40 and 42 and the adaptive rate mobile station receiver and transmitter 44 and 46 may be used to implement the method 100 in accordance with the present invention. In the method 100, logical link control (LLC) protocol data units (PDUs) 102 are segmented into fixed length radio link control (RLC) blocks 104 and a Cyclic Redundancy Check (CRC) sequence 106, which is preferably 12 bits in length, is added to each RLC block 104. In combination, each RLC block 104 and its associated CRC sequence 106 is designated as an error coded RLC block 108. Each error coded RLC block 108 is encoded preferably using a rate 1/3 convolutional code 110. The output of the encoder, or encoded error coded RLC blocks 112, is interleaved and segmented, shown as block 114, into G Coded Sub-blocks 116 and 120, each coded sub-block being denoted in the figures as *C*_{*ij*}, j=1, ... G.

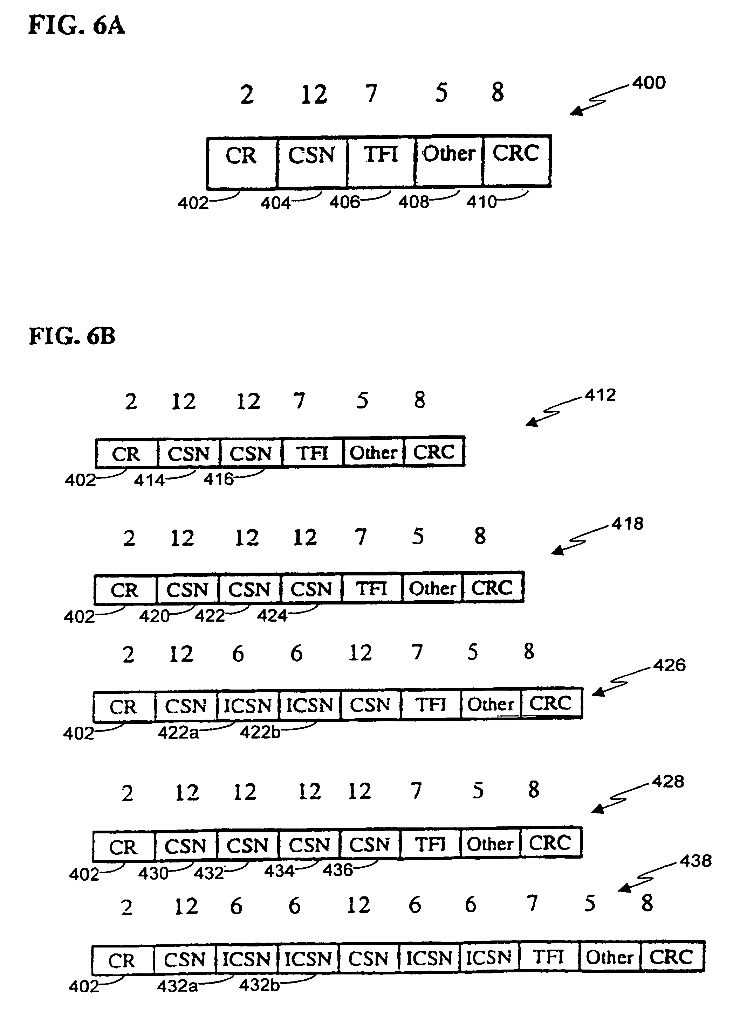

Values of G = 12 and 6 are shown in respective FIGS. 3 and 4. Those skilled in the art will readily comprehend with the assistance of this disclosure, that other values for G, such as 18, may be implemented in the present invention. Segmentation into 12 coded sub-blocks 116 (G = 12) enables code rates 1, 2/3, ½, 1/3, 4/5 and 4/7. Segmentation into 6 coded sub-blocks 120 (G = 6) enables code rates 1, 2/3, ½ and 1/3. As those of ordinary skill in the art will readily appreciate, G = 12 offers greater flexibility and efficiency with little, or no increase in complexity. As will be apparent below, the method 100, or transmission scheme, in accordance with one version of the present invention uses IR (D = 1) and thus, facilitates operation with or without the use of IR. As will be discussed further with respect to FIGS. 6A and 6B, a Coded sub-block Sequence Number (CSN), which is preferably 12 bits in length, is associated with each coded sub-block Cij. A more detailed description of incremental redundancy techniques may be found in US-B-6 778 558.

Groups of the coded sub-blocks *C*_{*ij*} are assembled to form Transmission Units (TUs), *P*_{*ik*} (FIGS. 3 and 4). Depending on the current code rate of the LA scheme, each TU *P*_{*ik*} may consist of G/3, G/2, 2G/3 or G consecutive coded sub-blocks associated with the same RLC block, which correspond to code rates of 1, 2/3, ½ and 1/3, respectively. The TUs *P*_{*ik*} are preferably of variable size. Thus, for G = 6 and for code rates 1, 2/3, ½ and 1/3, the TUs *P*_{*ik*} consist of 2, 3, 4, and 6 consecutive coded sub-blocks *C*_{*ij*}, respectively. If G = 12 and for code rates 1, 2/3, ½ and 1/3, the TUs *P*_{*ik*} consist of 4, 6, 8, and 12 consecutive coded sub-blocks *C*_{*ij*}, respectively.

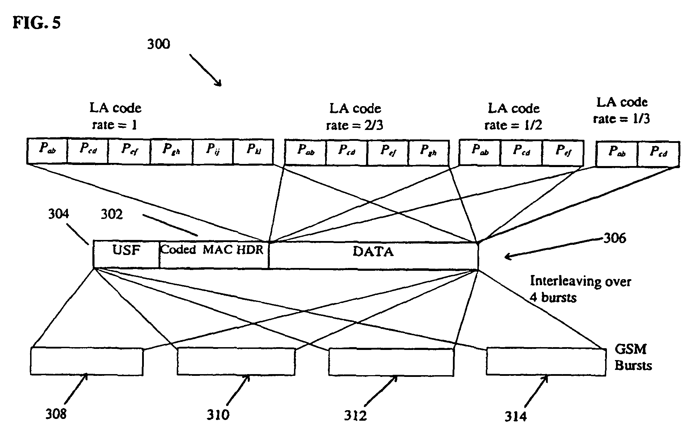

As shown in FIG. 5, a method 300, or transmission scheme, is utilized on the downlink. In accordance with the downlink method 300, multiple TUs *P*_{*ik*} are combined with a media access control (MAC) header 302 and an Uplink State Flag (USF) 304 to form a downlink segment 306. Preferably, one or both of the MAC header 302 and the USF 304 are coded. The downlink segment 306 is interleaved and transmitted over four Global System for Mobile Communication (GSM) bursts 308, 310, 312 and 314. The number of TUs transmitted over the four 8-phase shift keyed (8-PSK) GSM bursts 308, 310, 312 and 314 is 6, 4, 3, or 2 for code rates 1, 2/3, ½, or 1/3 respectively.

As noted above, there is a CSN associated with each coded sub-block *C*_{*ij*}. Each TU includes the CSN for the first coded sub-block *C*_{*ij*} in the TU. The TU only needs the CSN for the first coded sub-block, since the remaining coded sub-blocks in the TU are consecutive. For retransmission, the MAC header 302 therefore must explicitly or implicitly identify the CSN for up to 6 TUs. Explicit identification is required due to the fact that during retransmission of data, the data is typically not sent in sequence as it is during its initial transmission.

In accordance with another aspect of the present invention, two schemes, a first scheme for G = 12 and a second scheme for G = 6 are disclosed for specifying the coded MAC header 302 for 8-PSK. With reference to FIGS. 6A and 6B, the first scheme will now be described.

In EDGE, each TU included in the four GSM bursts must be identified in the coded MAC header. As noted previously, each TU is identified by the CSN of its first coded sub-block *C*_{*ij*}. The size and the number of TUs are mdicated implicitly through the use of a code rate (CR) field in the coded MAC header. When all TUs are consecutive (and thus so are the RLC blocks), there is no need to include several CSNs in the coded MAC header. Therefore, when there are no retransmissions the coded MAC header contains the CSN of the first TU only, and the remaining TUs are assumed to be consecutive. In such a case, the MAC header is designated as a short MAC header.

One example of a short MAC header 400 is shown in FIG. 6A. The short MAC header 400 is comprised of a CR field 402, a CSN field 404, a temporary flow identifier (TFI) field 406, a general Other field 408 and a CRC sequence 410. As those skilled in the will readily understand, the TFI field 406 is used to distinguish between multiple mobile stations in a well known manner. The Other field 408 contains data which is not relevant to the present invention.

The CR field 402 may be preferably encoded as follows:

| CR | Code Rate |
|---|---|
| 00 | 1 |
| 01 | 2/3 |
| 10 | ½ |
| 11 | 1/3 |

Information bits in the short MAC header 410 are protected by the CRC sequence 410, which is preferably 8 bits, for header error detection. The short MAC header 410, shown in FIG. 6A as 34 total bits, is then coded using a punctured rate 1/3 code to obtain 76 bits.

Referring to FIG. 6B, when retransmissions are to be included, additional CSNs need to be contained in the MAC header. In accordance with another aspect of the present invention, a series of extended MAC headers is used to provide these additional CSNs. For example, and not limitation, three types of coded extended MAC headers usable in systems employing LA and systems employing both LA and IR are disclosed.

For clarity and ease of description, fields which are the same as those shown in FIG. 6A will use the same reference numerals. A first extended MAC header format 412 consists of two CSN fields 414 and 416 for a total of 46 uncoded bits. The first extended MAC header format 412 is coded with a punctured rate 1/3 code to 129 bits. The first extended MAC header format 412 can be used for all code rates. A second extended MAC header format 418 consists of three CSN fields 420, 422 and 424 with 58 uncoded bits which are encoded to 129 bits. Different formats are defined for the three code rates 1, 2/3 and ½. The second extended MAC header format 418 is not used with code rate 1/3.

A modified second extended MAC header format 426 is shown in which one of the CSN fields 422 is split into two incremental CSN (ICSN) 422a and 422b. The two ICSN fields 422a and 422b each consist of 6 bits, or half of the 12 bit CSN field 422. The ISCN fields 422a and 422b indicate the increment of the CSN of its associated TU from the previous CSN in the same radio burst.

A third extended MAC header format 428 consists of four CSN fields 430, 432, 434 and 436 having a total of 70 uncoded bits which are then encoded to 129 bits. Different formats are defined for the code rates 1, 2/3. The third extended MAC header format 428 is not used with code rates ½ and 1/3. A modified third extended MAC header format 438 is shown in which the CSN field 432 is split into two ICSN fields 432a and 432b and the CSN field 436 is split into two ICSN fields 436a and 436b.

The first, second and third extended MAC header formats 412, 418 and 428 and the modified second and third extended MAC header formats 426 and 438 are identified through stealing bits. Those skilled in the art will readily appreciate that "stealing bits" is a term of art defined, for example, in the ETSI's standard for GSM. Within the formats 412, 418, 426, 428 and 438, the number and size of the CSN fields are determined by the CR field 402.

The length of the coded first, second and third extended MAC header formats 412, 418, 426, 428 and 438 are each 129 bits. The formats 412, 418, 426, 428 and 438 are designed to accommodate additional CSN fields for retransmissions, as well as varying the amount of coding according to channel conditions. The coded short MAC header 400, which is 76 bits, is augmented by 53 bits to get the coded extended MAC header formats. The additional 53 bits are obtained by dropping one coded sub-block from the first TU in the a set of four GSM bursts carrying retransmissions. As will be described, each coded sub-block *C*_{*ij*} is 53 bits in length in accordance with the RLC block size.

As will be appreciated by those skilled in the art, dropping a coded sub-block *C*_{*ij*} reduces the code rate for the TU being retransmitted. Consequently, for a code rate 2/3 (= 4/6) retransmission, dropping a coded sub-block results in the retransmitted TU having a retransmission code rate of 4/5. When the retransmitted TU is soft-combined with the earlier transmission in IR, the resultant rate becomes 4/11 instead of 1/3 (= 4/12). Accordingly, dropping one of the coded sub-blocks is particularly well-suited for IR. For link adaptation in the uncoded case, it is not possible to drop coded sub-blocks. An entire TU must be dropped to accommodate an extended MAC header. But in the IR case, when one coded sub-block is dropped, we get a retransmission code rate of 4/7 instead of a code rate of ½ (= 4/8) after the first retransmission. The coded MAC header format for each EDGE radio burst is indicated to the receiver through stealing bits.

| MAC Header Type (indicated through stealing bits) | MAC Header |
|---|---|
| 00 | Coded Short MAC Header (76 bits) |
| 01 | Coded First Extended MAC Header Format (129 bits) |
| 10 | Coded Second Extended MAC Header Format (129 bits) |
| 11 | Coded Third Extended MAC Header Format (129 bits) |

Preferably the coded extended MAC headers can be designed using the following principles. The coding of the short MAC header 400 at code rate ½ or less is sufficient in good channel conditions. In adverse channel conditions, however, the coded MAC header 400 should be better protected with a lower code rate, such as 1/3 or less. At the same time, the number of TUs per EDGE radio burst (and consequently the number of CSN fields to be carried in the MAC header) is smaller when the code rate is ½ or 1/3. Having a smaller number of CSN fields permits better coding of the MAC header using the same number of coded bits (129).

When more than one CSN field is included in a MAC header, each CSN field corresponds to an associated TU in order, except the last CSN field which signifies that the remaining TUs (with no CSN field included in the coded MAC header) are in-sequence. Thus in the first extended MAC header format 412, the first CSN field 414 may correspond to a retransmitted TU and the second CSN field 416 would indicate that the remaining TUs are in sequence starting from the second CSN field 416.

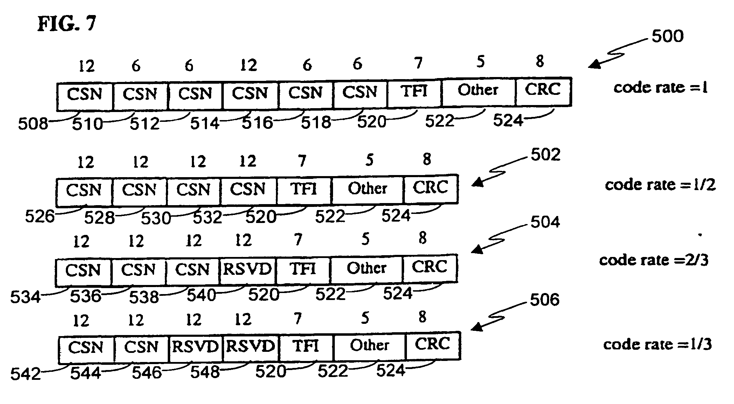

Referring now to FIG. 7, exemplary extended MAC header formats 500, 502, 504 and 506 are shown for G = 6. The MAC header formats 500, 502, 504 and 506 are shown for respective code rates 1, ½, 2/3 and 1/3. For code rate 1, the first extended (G = 6) MAC header format 500 is comprised of six consecutive CSN fields 508, 510, 512, 514, 516 and 518. The MAC header 500 further includes a TFI field 520, an Other field 522 and a CRC field 524. Preferably, the CRC field 524 is eight bits for header error detection.

For code rate ½, the second extended (G = 6) MAC header 502 is comprised of four consecutive 12 bit CSN fields 526, 528, 530 and 532, the TFI field 520, the Other field 522 and the CRC field 524. For code rate 2/3, the third extended (G=6) MAC header 504 is comprised of three consecutive CSN fields 534, 536 and 538, a reserved field 540, the TFI field 520, the Other field 522 and the CRC field 524. For code rate 1/3, the fourth extended (G = 6) MAC header 506 is comprised of two consecutive CSN fields 542 and 544, two reserved fields 546 and 548, the TFI field 520, the Other field 522 and the CRC field 524. Each of the MAC headers 500, 502, 504 and 506 when uncoded contain 68 bits. The MAC headers 500, 502, 504 and 506 are coded using a punctured rate ½ code to obtain 132 bits.

For code rates 1, 2/3, ½ and 1/3, the transmission consists of 6, 4, 3, and 2 TUs, respectively. As described above, each TU is identified by the CSN of its first coded sub-block *C*_{*ij*}. In the uncoded case, the six TUs are divided into two groups of three TUs. To minimize overhead, the CSN for the first TU in each group is specified and the remaining two are specified as being in 6 bit increments from the first TU. Therefore, the TUs in each group are constrained to have CSNs that differ in fewer than 6 bits.

Advantageously, the present invention enables both link adaptation and incremental redundancy. Since fixed length RLC blocks are used, link adaptation is smooth and simple, and there is no loss of throughput while switching coding schemes. This enables fast link adaptation with no throughput penalty. Since there are only 212 bits per RLC block in the present invention, the RLC block error rate (BLER) is smaller than other known techniques. The present invention provides four code rates in the range of uncoded to rate 1/3. The present invention further allows adaptation between many different code rates with 8-PSK and gaussian minimum shift keying (GMSK) without resegmentation, as required in prior methods.

In accordance with the present invention, it is possible for a transmitter to always operate in the incremental redundancy mode (D=1), independent of receiver operation. Assembly of TUs into physical layer bursts depends only on the code rate being used. The transmitter does not need to know if link adaptation or incremental redundancy mode is used at the receiver.

However, in practice, there is no reason for the transmitter to be unaware of the receiver capability. The transmitter and receiver could exchange this information during the establishment of a temporary block flow. The method of the present invention with G = 12 and 6 permits link adaptation and incremental redundancy through one convolutional coder. By implementing the present invention, it may be possible that retransmissions could consist of fewer coded sub-blocks than the original transmission when the receiver uses IR.

For the method disclosed in FIG. 1, the peak throughput has been computed as follows. There are 1384 bits per 8-PSK PDU (interleaved over 4 GSM bursts). The CRC overhead is 72 bits (since 6 uncoded RLC blocks may be transmitted over EDGE radio bursts). The USF field and the coded short MAC header comprise 36 and 84 bits, respectively. Accordingly, each RLC/MAC block contains (1384-36-72-76)/6 = 200 LLC data bits. The peak throughput can therefore be calculated as (200 bits/RLC block *6 RLC blocks)/20 ms = 60 kbps.

Retransmissions in the uncoded case with IR result in a code rate of 4/7 after the first retransmission. In the absence of soft-combining, it is assumed that in the uncoded case, only 5 RLC blocks are transmitted in a set of four GSM bursts carrying retransmissions. However, those skilled in the art will readily comprehend with the benefit of this disclosure, that other coded short MAC header formats that accommodate two CSNs within the 76 coded bits may be devised. This is possible because uncoded operation without soft-combining can occur only under very good channels which would allow the short MAC header to be coded at rate 2/3.

As those skilled in the art will readily appreciate, systems for implementing GSM, in general, and GPRS and EDGE capabilities are well known in the art. Since the structure and philosophy of these systems are not important to the present invention beyond the generation, transmission and receipt of wireless communication signals, details of such systems will not be further disclosed herein. Those desiring additional information regarding such systems are referred to U.S. Patent No. 5,729,536, entitled "Cellular System Architectures Supporting Data Services".

## Claims

1. A wireless communication system being capable of supporting link adaptation and incremental redundancy comprising:
a transmitter (40, 46) that segments logical link control (LLC) blocks (102) into fixed length radio link control (RLC) blocks (104);
wherein the transmitter (40, 46) adds a cyclic redundancy check sequence (106) to the fixed length RLC blocks (104) to obtain error coded RLC blocks (108);
wherein the transmitter (40, 46) processes the error coded RLC blocks (108) to obtain coded sub-blocks (116, 120);
wherein the transmitter (40, 46) configures the coded sub-blocks (116, 120) into transmission units (Pᵢₖ) being capable of supporting link adaptation at multiple code rates;
wherein the transmitter (40, 46) forms a header (302) indicative of the transmission units (Pᵢₖ) to be transmitted;wherein the transmitter (40, 46) transmits the transmission units (Pᵢₖ) with the header (302).

2. The wireless communication system as recited in claim 1 comprising:
a receiver (42, 44) that receives the transmission units (Pᵢₖ);
wherein the receiver decodes the fixed length RLC blocks (104) from the received transmission units (Pᵢₖ).

3. The wireless communication system as recited in claim 2, wherein the transmitter (40, 46) comprises:
an adaptive rate transmitter that retransmits at least one of the fixed length RLC blocks (104) at a code rate which may be different from the code rate used for an initial transmission of the at least one of the fixed length RLC blocks (104).

4. The wireless communication system as recited in claim 3 wherein the adaptive rate transmitter retransmits the at least one of the RLC blocks (104) in a transmission unit (Pᵢₖ) which may be different than the transmission unit (Pᵢₖ) in which the at least one of the RLC blocks (104) was initially transmitted.

5. The wireless communication system as recited in claim 3, wherein the adaptive rate transmitter retransmits only a portion of a transmission unit (Pᵢₖ) including the at least one RLC block (104).

6. The wireless communication system as recited in claim 5, wherein the adaptive rate transmitter retransmits the portion of a transmission unit (Pᵢₖ) comprises a integer number of the coded sub-blocks (116, 120).

7. The wireless communication system as recited in claim 5, wherein the adaptive rate transmitter retransmits a transmission unit (Pᵢₖ) comprised of coded sub-blocks (116, 120) which have not been transmitted previously.

8. The wireless communications system as recited in claim 2 wherein the transmitter (40, 46) comprises:
an adaptive rate transmitter that retransmits at least a portion of the transmission units (Pᵢₖ) associated with at least one of the RLC blocks (104) to the receiver (42, 44).

9. The wireless communications system as recited in claim 2 wherein the transmitter (40, 46) comprises:
an adaptive rate transmitter that retransmits the transmission units (Pᵢₖ) to the receiver (116, 120) at a retransmission code rate which is different than the code rate at which the transmission units (Pᵢₖ) were transmitted.

10. The wireless communications systems as recited in claim 1 wherein the transmitter (40, 46) adds cyclic redundancy check sequences (106) to the RLC blocks (104) to form error coded RLC blocks (108) which are configured into the coded sub-blocks (116, 120).

11. The wireless communications system as recited in claim 1 wherein the transmitter (40, 46) comprises:
an adaptive rate transmitter that forms the coded sub-blocks (116, 120) by dividing the RLC blocks (104) by a variable value.

12. The wireless communications system as recited in claim 9 wherein the variable value is one of 6, 12 and 18.

13. The wireless communications system as recited in claim 1 wherein the transmitter (40, 46) performs convolutional coding on the error coded RLC blocks (108) to generate encoded RLC blocks (112).

14. The wireless communications system as recited in claim 13 wherein the transmitter (40, 46) interleaves the encoded RLC blocks (112) to obtain the coded sub-blocks (116, 120).

15. The wireless communications system as recited in claim 1 wherein the transmitter (40, 46) transmits the transmission units (Pᵢₖ) over GSM bursts (308, 310, 312, 314).

16. The wireless communications system as recited in claim 1 wherein the transmitter (40, 46) forms the transmission units (Pᵢₖ) using different numbers of the coded sub-blocks (116, 120) to obtain multiple code rates for the link adaptation.

17. The wireless communications system as recited in claim 1 wherein the transmitter (40, 46) uses different transmission units (Pᵢₖ) for an initial transmission and for a retransmission of the RLC blocks (104).

18. The wireless communications system as recited in claim 1 wherein the transmitter (40, 46) uses only a portion of one of the transmission units (Pᵢₖ) for a retransmission of the RLC blocks (104).

19. The wireless communications system as recited in claim 18 wherein the transmitter (40, 46) uses an integer number of the coded sub-blocks (116, 120) to form the portion of the one of the transmission units (Pᵢₖ) used for the retransmission of the RLC blocks (104).

20. The wireless communications system as recited in claim 19 wherein the integer number of the coded sub-blocks (116, 120) comprise coded sub-blocks (116, 120) which have not been transmitted earlier.

21. The wireless communications system as recited in claim 1 wherein the header (302) comprises at least one coded sub-block sequence number associated with at least one of the coded sub-blocks (116, 120) in the transmission units (Pᵢₖ) to be transmitted.

22. The wireless communications system as recited in claim 1 wherein the header (302) comprises a code rate field indicative of the size and number of transmission units (Pᵢₖ) to be transmitted.

23. The wireless communications system as recited in claim 22 wherein the header (302) comprises a temporary flow identifier indicative of which receiver (42, 44) should receive the transmission units (Pᵢₖ) or which transmitter (40, 46) has sent the transmission units (Pᵢₖ).

24. The wireless communications system as recited in claim 1 wherein the transmitter (40, 46) forms at least two of the transmission units (Pᵢₖ) of an unequal number of coded sub-blocks (116, 120).

25. The wireless communications system as recited in claim 1 wherein the transmitter (40, 46) transmits the transmission units (Pᵢₖ) over a general packet radio services system.

26. A method for communicating in a wireless communication system being capable of supporting link adaptation between multiple code rates and incremental redundancy, the method comprising the steps of:
forming fixed length radio link control (RLC) blocks (104);
combining the RLC blocks (104) with a cyclic redundancy check sequence (106) for error detection to form error coded RLC blocks (108);
processing the error coded RLC blocks (108) to form coded sub-blocks (116, 120);
assembling groups of the coded sub-blocks (116, 120) into transmission units (Pᵢₖ) based on the multiple code rates;
forming a header (302) indicative of the transmission units (Pᵢₖ); and
transmitting the transmission units (Pᵢₖ) and the header (302) to a receiver (42, 44).

27. The method as recited in claim 26 wherein the step of processing the error coded RLC blocks (108) comprises the steps of:
performing a convolutional coding on the error coded RLC blocks (108) to generate encoded RLC blocks (112); and
forming the coded sub-blocks (116, 120) from the encoded RLC blocks (112).

28. The method as recited in claim 27 wherein the step of performing comprises the step of performing the convolutional coding with a 1/3 code rate.

29. The method as recited in claim 27 wherein the step of forming the coded sub-blocks (116, 120) comprises the step of interleaving the encoded RLC blocks (112).

30. The method as recited in claim 29 wherein the step of forming the coded sub-blocks (116, 120) comprises the step of
segmenting the interleaved encoded RLC blocks into G coded sub-blocks (116, 120) and,
wherein groups of the coded sub-blocks (116, 120) are assembled to form the transmission units (Pᵢₖ).

31. The method as recited in claim 30 wherein the step of transmitting comprises the step of transmitting the transmission units (Pᵢₖ) over GSM bursts (308, 310, 312, 314).

32. The method as recited in claim 30 wherein at least two of the transmission units (Pᵢₖ) have a different number of coded sub-blocks (116, 120).

33. The method as recited in claim 32 wherein the transmission units (Pᵢₖ) are modulated using phase shift keying.

34. The method as recited in claim 32 wherein the transmission units (Pᵢₖ) are modulated using gaussian minimum shift keying.

35. The method as recited in claim 26 comprising the step of:
retransmitting at least one of the RLC blocks (104) at a code rate which may be different from the code rate used for an initial transmission of the at least one of the RLC blocks (104).

36. The method as recited in claim 35 wherein the step of retransmitting comprises the step of:
dropping one of the coded sub-blocks (116, 120) when retransmitting the transmission units (Pᵢₖ).

37. The method as recited in claim 36 wherein the step of retransmitting comprises the step of:
replacing the dropped one of the coded sub-blocks (116, 120) with extended header information in the retransmitted transmission units (Pᵢₖ).

38. The method as recited in claim 37 wherein the step of replacing comprises the step of:
providing a coded sub-block sequence number in the extended header information.

## Patentansprüche

1. Drahtloses Kommunikationssystem mit der Fähigkeit zum Unterstützen von Verbindungsanpassung und inkrementaler Redundanz, mit folgendem:
einem Sender (40, 46), der LLC-Blöcke (102) (Logical Link Control - logische Übertragungssteuerung) in RLC-Blöcke (104) (Radio Link Control - Funkübertragungssteuerung) fester Länge segmentiert;
wobei der Sender (40, 46) den RLC-Blöcken (104) fester Länge eine zyklische Redundanzprüfungsfolge (106) hinzufügt, um fehlercodierte RLC-Blöcke (108) zu erhalten;
wobei der Sender (40, 46) die fehlercodierten RLC-Blöcke (108) verarbeitet, um codierte Teilblöcke (116, 120) zu erhalten;
wobei der Sender (40, 46) die codierten Teilblöcke (116, 120) in Übertragungseinheiten (Pᵢₖ) konfiguriert, die Verbindungsanpassung bei mehrfachen Coderaten unterstützen können;
wobei der Sender (40, 46) einen die zu übertragenden Übertragungseinheiten (Pᵢₖ) anzeigenden Kopfteil (302) bildet; wobei der Sender (40, 46) die Übertragungseinheiten (Pᵢₖ) mit dem Kopfteil (302) überträgt.

2. Drahtloses Kommunikationssystem nach Anspruch 1, mit folgendem:
einem Empfänger (42, 44), der die Übertragungseinheiten (Pᵢₖ) empfängt;
wobei der Empfänger die RLC-Blöcke (104) fester Länge aus den empfangenen Übertragungseinheiten (Pᵢₖ) decodiert.

3. Drahtloses Kommunikationssystem nach Anspruch 2, wobei der Sender (40, 46) folgendes umfaßt:
einen Sender mit adaptiver Rate, der mindestens einen der RLC-Blöcke (104) fester Länge mit einer Coderate wiederholt, die sich von der für eine Anfangsübertragung des mindestens einen der RLC-Blöcke (104) fester Länge benutzten Coderate unterscheiden kann.

4. Drahtloses Kommunikationssystem nach Anspruch 3, wobei der Sender mit adaptiver Rate den mindestens einen der RLC-Blöcke (104) in einer Übertragungseinheit (Pᵢₖ) wiederholt, die sich von der Übertragungseinheit (Pᵢₖ) unterscheiden kann, in der der mindestens eine der RLC-Blöcke (104) anfänglich übertragen würde.

5. Drahtloses Kommunikationssystem nach Anspruch 3, wobei der Sender mit adaptiver Rate nur einen Teil einer Übertragungseinheit (Pᵢₖ) einschließlich des mindestens einen RLC-Blocks (104) wiederholt.

6. Drahtloses Kommunikationssystem nach Anspruch 5, wobei der Sender mit adaptiver Rate den Teil einer Übertragungseinheit (Pᵢₖ) wiederholt, der eine Ganzzahl der codierten Teilblöcke (116, 120) umfaßt.

7. Drahtloses Kommunikationssystem nach Anspruch 5, wobei der Sender mit adaptiver Rate eine Übertragungseinheit (Pᵢₖ) wiederholt, die codierte Teilblöcke (116, 120) umfaßt, die nicht vorher übertragen worden sind.

8. Drahtloses Kommunikationssystem nach Anspruch 2, wobei der Sender (40, 46) folgendes umfaßt:
einen Sender mit adaptiver Rate, der mindestens einen Teil der mindestens einen der RLC-Blöcke (104) zugeordneten Übertragungseinheit (Pᵢₖ) zum Empfänger (42, 44) wiederholt.

9. Drahtloses Kommunikationssystem nach Anspruch 2, wobei der Sender (40, 46) folgendes umfaßt:
einen Sender mit adaptiver Rate, der die Übertragungseinheiten (Pᵢₖ) mit einer Wiederholungscoderate zum Empfänger (116, 120) wiederholt, die sich von der Coderate unterscheidet, mit der die Übertragungseinheiten (Pᵢₖ) übertragen wurden.

10. Drahtloses Kommunikationssystem nach Anspruch 1, wobei der Sender (40, 46) den RLC-Blöcken (104) zyklische Redundanzprüffolgen (106) hinzufügt, um fehlercodierte RLC-Blöcke (108) zu bilden, die in die codierten Teilblöcke (116, 120) konfiguriert werden.

11. Drahtloses Kommunikationssystem nach Anspruch 1, wobei der Sender (40, 46) folgendes umfaßt:
einen Sender mit adaptiver Rate, der die codierten Teilblöcke (116, 120) durch Teilen der RLC-Blöcke (104) durch einen veränderlichen Wert bildet.

12. Drahtloses Kommunikationssystem nach Anspruch 9, wobei der veränderliche Wert einer von 6, 12 und 18 ist.

13. Drahtloses Kommunikationssystem nach Anspruch 1, wobei der Sender (40, 46) Faltungscodierung an den fehlercodierten RLC-Blöcken (108) durchführt, um codierte RLC-Blöcke (112) zu erzeugen.

14. Drahtloses Kommunikationssystem nach Anspruch 13, wobei der Sender (40, 46) die codierten RLC-Blöcke (112) verschachtelt, um die codierten Teilblöcke (116, 120) zu erhalten.

15. Drahtloses Kommunikationssystem nach Anspruch 1, wobei der Sender (40, 46) die Übertragungseinheiten (Pᵢₖ) über GSM-Burst (308, 310, 312, 314) überträgt.

16. Drahtloses Kommunikationssystem nach Anspruch 1, wobei der Sender (40, 46) die Übertragungseinheiten (Pᵢₖ) unter Verwendung unterschiedlicher Zahlen der codierten Teilblöcke (116, 120) bildet, um mehrere Coderaten für die Verbindungsanpassung zu erhalten.

17. Drahtloses Kommunikationssystem nach Anspruch 1, wobei der Sender (40, 46) für eine Anfangsübertragung und für eine Wiederholung der RLC-Blöcke (104) unterschiedliche Übertragungseinheiten (Pᵢₖ) benutzt.

18. Drahtloses Kommunikationssystem nach Anspruch 1, wobei der Sender (40, 46) nur einen Teil von einer der Übertragungseinheiten (Pᵢₖ) für eine Wiederholung der RLC-Blöcke (104) benutzt.

19. Drahtloses Kommunikationssystem nach Anspruch 18, wobei der Sender (40, 46) eine Ganzzahl der codierten Teilblöcke (116, 120) benutzt, um den zur Wiederholung der RLC-Blöcke (104) benutzten Teil des einen der Übertragungseinheiten (Pᵢₖ) zu bilden.

20. Drahtloses Kommunikationssystem nach Anspruch 19, wobei die Ganzzahl der codierten Teilblöcke (116, 120) codierte Teilblöcke (116, 120) umfaßt, die nicht früher übertragen worden sind.

21. Drahtloses Kommunikationssystem nach Anspruch 1, wobei der Kopfteil (302) mindestens eine codierte Teilblockfolgennummer umfaßt, die mindestens einem der codierten Teilblöcke (116, 120) in den zu übertragenden Übertragungseinheiten (Pᵢₖ) zugeordnet ist.

22. Drahtloses Kommunikationssystem nach Anspruch 1, wobei der Kopfteil (302) ein die Größe und Anzahl von zu übertragenden Übertragungseinheiten (Pᵢₖ) anzeigendes Coderatenfeld umfaßt.

23. Drahtloses Kommunikationssystem nach Anspruch 22, wobei der Kopfteil (302) eine zeitweilige Flußkennung umfaßt, die anzeigt, welcher Empfänger (42, 44) die Übertragungseinheiten (Pᵢₖ) empfangen sollte oder welcher Sender (40, 46) die Übertragungseinheiten (Pᵢₖ) gesendet hat.

24. Drahtloses Kommunikationssystem nach Anspruch 1, wobei der Sender (40, 46) mindestens zwei der Übertragungseinheiten (Pᵢₖ) aus einer ungleichen Anzahl codierter Teilblöcke (116, 120) bildet.

25. Drahtloses Kommunikationssystem nach Anspruch 1, wobei der Sender (40, 46) die Übertragungseinheiten (Pᵢₖ) über ein System allgemeiner paketvermittelter Funkdienste überträgt.

26. Verfahren zum Kommunizieren in einem drahtlosen Kommunikationssystem mit der Fähigkeit zur Unterstützung von Verbindungsanpassung zwischen mehreren Coderaten und inkrementaler Redundanz, mit folgenden Schritten:
Bilden von RLC-Blöcken (104) (Radio Link Control - Funkübertragungssteuerung) fester Länge;
Kombinieren der RLC-Blöcke (104) mit einer zyklischen Redundanzprüffolge (106) zur Fehlererkennung zum Bilden von fehlercodierten RLC-Blöcken (108);
Verarbeiten der fehlercodierten RLC-Blöcke (108), um codierte Teilblöcke (116, 120) zu bilden;
Zusammensetzen von Gruppen der codierten Teilblöcke (116, 120) in Übertragungseinheiten (Pᵢₖ) auf Grundlage der mehreren Coderaten;
Bilden eines die Übertragungseinheiten (Pᵢₖ) anzeigenden Kopfteils (302); und
Übertragen der Übertragungseinheiten (Pᵢₖ) und des Kopfteils (302) zu einem Empfänger (42, 44).

27. Verfahren nach Anspruch 26, wobei der Schritt des Verarbeitens der fehlercodierten RLC-Blöcke (108) folgende Schritte umfaßt:
Durchführen einer Faltungscodierung an den fehlercodierten RLC-Blöcken (108) zum Erzeugen von codierten RLC-Blöcken (112); und
Bilden der codierten Teilblöcke (116, 120) aus den codierten RLC-Blöcken (112).

28. Verfahren nach Anspruch 27, wobei der Schritt des Durchführens den Schritt des Durchführens der Faltungscodierung mit einer 1/3-Coderate umfaßt.

29. Verfahren nach Anspruch 27, wobei der Schritt des Bildens der codierten Teilblöcke (116, 120) den Schritt des Verschachtelns der codierten RLC-Blöcke (112) umfaßt.

30. Verfahren nach Anspruch 29, wobei der Schritt des Bildens der codierten Teilblöcke (116, 120) den Schritt des
Segmentierens der verschachtelten codierten RLC-Blöcke in G codierte Teilblöcke (116, 120) umfaßt und
wobei Gruppen der codierten Teilblöcke (116, 120) zusammengesetzt werden, um die Übertragungseinheiten (Pᵢₖ) zu bilden.

31. Verfahren nach Anspruch 30, wobei der Schritt des Übertragens den Schritt des Übertragens der Übertragungseinheiten (Pᵢₖ) über GSM-Burst (308, 310, 312, 314) umfaßt.

32. Verfahren nach Anspruch 30, wobei mindestens zwei der Übertragungseinheiten (Pᵢₖ) eine unterschiedliche Anzahl von codierten Teilblöcken (116, 120) aufweisen.

33. Verfahren nach Anspruch 32, wobei die Übertragungseinheiten (Pᵢₖ) unter Verwendung von Phasenumtastung moduliert werden.

34. Verfahren nach Anspruch 32, wobei die Übertragungseinheiten (Pᵢₖ) unter Verwendung von Gausscher Mindestwert-Umtastung moduliert werden.

35. Verfahren nach Anspruch 26, mit dem folgenden Schritt:
Wiederholen des mindestens einen der RLC-Blöcke (104) mit einer Coderate, die sich von der für eine Anfangsübertragung des mindestens einen der RLC-Blöcke (104) benutzten Coderate unterscheiden kann.

36. Verfahren nach Anspruch 35, wobei der Schritt des Wiederholens den Schritt des Abwerfens eines der codierten Teilblöcke (116, 120) bei der Wiederholung der Übertragungseinheiten (Pᵢₖ) umfaßt.

37. Verfahren nach Anspruch 36, wobei der Schritt des Wiederholens den Schritt des Ersetzens des abgeworfenen der codierten Teilblöcke (116, 120) durch erweiterte Kopfteilinformationen in den wiederholten Übertragungseinheiten (Pᵢₖ) umfaßt.

38. Verfahren nach Anspruch 37, wobei der Schritt des Ersetzens den Schritt des Bereitstellens einer codierten Teilblock-Folgenummer in den erweiterten Kopfteilinformationen umfaßt.

## Revendications

1. Système de communication sans fil capable de supporter l'adaptation de liaison et la redondance incrémentielle comprenant :
un émetteur (40, 46) qui segmente des blocs de commande de liaison logique (LLC) (102) en blocs de commande de liaison radio (RLC) de longueur fixe (104) ;
dans lequel l'émetteur (40, 46) ajoute une séquence de contrôle de redondance cyclique (106) aux blocs RLC de longueur fixe (104) afin d'obtenir des blocs RLC à erreurs codées (108) ;
dans lequel l'émetteur (40, 46) traite les blocs RLC à erreurs codées (108) afin d'obtenir des sous-blocs codés (116, 120) ;
dans lequel l'émetteur (40, 46) configure les sous-blocs codés (116, 120) en unités de transmission (Pᵢₖ) capables de supporter l'adaptation de liaison à des rendements de codage multiples ;
dans lequel l'émetteur (40, 46) forme un en-tête (302) indicatif des unités de transmission (Pᵢₖ) à transmettre ; dans lequel l'émetteur (40, 46) transmet les unités de transmission (Pᵢₖ) avec l'en-tête (302).

2. Système de communication sans fil selon la revendication 1, comprenant :
un récepteur (42, 44) qui reçoit les unités de transmission (Pᵢₖ) ;
dans lequel le récepteur décode les blocs RLC de longueur fixe (104) des unités de transmission reçues (Pᵢₖ).

3. Système de communication sans fil selon la revendication 2, dans lequel l'émetteur (40, 46) comprend :
un émetteur à débit adaptatif qui retransmet au moins un des blocs RLC de longueur fixe (104) à un rendement de codage qui peut être différent du rendement de codage utilisé pour une transmission initiale de l'au moins des blocs RLC de longueur fixe (104).

4. Système de communication sans fil selon la revendication 3, dans lequel l'émetteur à débit adaptatif retransmet l'au moins un des blocs RLC (104) dans une unité de transmission (Pᵢₖ) qui peut être différente de l'unité de transmission (Pᵢₖ) dans laquelle l'au moins un des blocs RLC (104) a été initialement transmis.

5. Système de communication sans fil selon la revendication 3, dans lequel l'émetteur à débit adaptatif retransmet une partie seulement d'une unité de transmission (Pᵢₖ) comportant l'au moins un bloc RLC (104).

6. Système de communication sans fil selon la revendication 5, dans lequel l'émetteur à débit adaptatif retransmet la partie d'une unité de transmission (Pᵢₖ) qui comprend un nombre entier des sous-blocs codés (116, 120).

7. Système de communication sans fil selon la revendication 5, dans lequel l'émetteur à débit adaptatif retransmet une unité de transmission (Pᵢₖ) composée de sous-blocs codés (116, 120) qui n'ont pas été transmis antérieurement.

8. Système de communication sans fil selon la revendication 2, dans lequel l'émetteur (40, 46) comprend :
un émetteur à débit adaptatif qui retransmet au récepteur (42, 44) au moins une partie des unités de transmission (Pᵢₖ) associées à au moins un des blocs RLC (104).

9. Système de communication sans fil selon la revendication 2, dans lequel l'émetteur (40, 46) comprend
un émetteur à débit adaptatif qui retransmet au récepteur (116, 120) les unités de transmission (Pᵢₖ) à un rendement de codage de retransmission qui est différent du rendement de codage auquel les unités de transmission (Pᵢₖ) ont été transmises.

10. Système de communication sans fil selon la revendication 1, dans lequel l'émetteur (40, 46) ajoute des séquences de contrôle de redondance cyclique (106) aux blocs RLC (104) afin de former des blocs RLC à erreurs codées (108) qui sont configurés en les sous-blocs codés (116, 120).

11. Système de communication sans fil selon la revendication 1, dans lequel l'émetteur (40, 46) comprend :
un émetteur à débit adaptatif qui forme les sous-blocs codés (116, 120) en divisant les blocs RLC (104) par une valeur variable.

12. Système de communication sans fil selon la revendication 9, dans lequel la valeur variable est l'une de 6, 12 ou 18.

13. Système de communication sans fil selon la revendication 1, dans lequel l'émetteur (40, 46) effectue un codage convolutionnel sur les blocs RLC à erreurs codées (108) afin de générer des blocs RLC codés (112).

14. Système de communication sans fil selon la revendication 13, dans lequel l'émetteur (40, 46) entrelace les blocs RLC codés (112) afin d'obtenir les sous-blocs codés (116, 120).

15. Système de communication sans fil selon la revendication 1, dans lequel l'émetteur (40, 46) transmet les unités de transmission (Pᵢₖ) sur des rafales GSM (308, 310, 312, 314).

16. Système de communication sans fil selon la revendication 1, dans lequel l'émetteur (40, 46) forme les unités de transmission (Pᵢₖ) en utilisant des nombres différents des sous-blocs codés (116, 120) afin d'obtenir des rendements de codage multiples pour l'adaptation de liaison.

17. Système de communication sans fil selon la revendication 1, dans lequel l'émetteur (40, 46) utilise différentes unités de transmission (Pᵢₖ) pour une transmission initiale et pour une retransmission des blocs RLC (104).

18. Système de communication sans fil selon la revendication 1, dans lequel l'émetteur (40, 46) utilise uniquement une partie de l'une des unités de transmission (Pᵢₖ) pour une retransmission des blocs RLC (104).

19. Système de communication sans fil selon la revendication 18, dans lequel l'émetteur (40, 46) utilise un nombre entier des sous-blocs codés (116, 120) afin de former la partie de l'une des unités de transmission (Pᵢₖ) utilisées pour la retransmission des blocs RLC (104).

20. Système de communication sans fil selon la revendication 19, dans lequel le nombre entier des sous-blocs codés (116, 120) comprend des sous-blocs codés (116, 120) qui n'ont pas été transmis antérieurement.

21. Système de communication sans fil selon la revendication 1, dans lequel l'en-tête (302) comprend au moins un numéro de séquence de sous-blocs codés associé à au moins un des sous-blocs codés (116, 120) dans les unités de transmission (Pᵢₖ) à transmettre.

22. Système de communication sans fil selon la revendication 1, dans lequel l'en-tête (302) comprend un champ de rendement de codage indicatif de la taille et du nombre d'unités de transmission (Pᵢₖ) à transmettre.

23. Système de communication sans fil selon la revendication 22, dans lequel l'en-tête (302) comprend un identifiant de flux temporaire indicatif du récepteur (42, 44) qui devrait recevoir les unités de transmission (Pᵢₖ) ou de l'émetteur (40, 46) qui a envoyé les unités de transmission (Pᵢₖ).

24. Système de communication sans fil selon la revendication 1, dans lequel l'émetteur (40, 46) forme au moins deux des unités de transmission (Pᵢₖ) d'un nombre inégal de sous-blocs codés (116, 120).

25. Système de communication sans fil selon la revendication 1, dans lequel l'émetteur (40, 46) transmet les unités de transmission (Pᵢₖ) sur un système de services radio par paquets général.

26. Procédé de communication dans un système de communication sans fil capable de supporter l'adaptation de liaison entre des rendements de codage multiples et la redondance incrémentielle, le procédé comprenant les étapes suivantes :
formation de blocs de commande de liaison radio (RLC) de longueur fixe (104) ;
combinaison des blocs RLC (104) à une séquence de contrôle de redondance cyclique (106) pour la détection d'erreurs afin de former des blocs RLC à erreurs codées (108) ;
traitement des blocs RLC à erreurs codées (108) afin de former des sous-blocs codés (116, 120) ;
assemblage de groupes des sous-blocs codés (116, 120) en unités de transmission (Pᵢₖ) en fonction des rendements de codage multiples ;
formation d'un en-tête (302) indicatif des unités de transmission (Pᵢₖ) ; et
transmission des unités de transmission (Pᵢₖ) et de l'en-tête (302) à un récepteur (42, 44).

27. Procédé selon la revendication 26, dans lequel l'étape de traitement des blocs RLC à erreurs codées (108) comprend les étapes suivantes :
exécution d'un codage convolutionnel sur les blocs RLC à erreurs codées (108) afin de générer des blocs RLC codés (112) ; et
formation des sous-blocs codés (116, 120) à partir des blocs RLC codés (112).

28. Procédé selon la revendication 27, dans lequel l'étape d'exécution comprend l'étape d'exécution du codage convolutionnel avec un rendement de codage de 1/3.

29. Procédé selon la revendication 27, dans lequel l'étape de formation des sous-blocs codés (116, 120) comprend l'étape d'entrelacement des blocs RLC codés (112).

30. Procédé selon la revendication 29, dans lequel l'étape de formation des sous-blocs codés (116, 120) comprend l'étape suivante :
segmentation des blocs RLC codés entrelacés en G sous-blocs codés (116, 120) ; et
dans lequel des groupes de sous-blocs codés (116, 120) sont assemblés pour former des unités de transmission (Pᵢₖ).

31. Procédé selon la revendication 30, dans lequel l'étape de transmission comprend l'étape de transmission des unités de transmission (Pᵢₖ) sur des rafales GSM (308, 310, 312, 314).

32. Procédé selon la revendication 30, dans lequel au moins deux des unités de transmission (Pᵢₖ) ont un nombre différent de sous-blocs codés (116, 120).

33. Procédé selon la revendication 32, dans lequel les unités de transmission (Pᵢₖ) sont modulées par modulation par déplacement de phase.

34. Procédé selon la revendication 32, dans lequel les unités de transmission (Pᵢₖ) sont modulées par modulation par déplacement gaussien minimum.

35. Procédé selon la revendication 26, comprenant l'étape suivante :
retransmission d'au moins un des blocs RLC (104) à un rendement de codage qui peut être différent du rendement de codage utilisé pour une transmission initiale de l'au moins un des blocs RLC (104).

36. Procédé selon la revendication 35, dans lequel l'étape de retransmission comprend l'étape suivante :
abandon de l'un des sous-blocs codés (116, 120) lors de la retransmission des unités de transmission (Pᵢₖ).

37. Procédé selon la revendication 36, dans lequel l'étape de retransmission comprend l'étape suivante :
remplacement du sous-bloc abandonné des sous-blocs codés (116, 120) par des informations d'en-tête étendues dans les unités de transmission retransmises (Pᵢₖ).

38. Procédé selon la revendication 37, dans lequel l'étape de remplacement comprend l'étape suivante :
fourniture d'un numéro de séquence de sous-blocs codés dans les informations d'en-tête étendues.
